Europäisches Patentamt

(19) **European Patent Office**

Office européen des brevets

(11) Publication number: **0 257 008**
**B1**

(12) **EUROPEAN PATENT SPECIFICATION**

(45) Date of publication of the patent specification:
**18.07.90**

(51) Int. Cl.⁵: **A01B 61/04, A01B 15/14**

(21) Application number: **87850241.8**

(22) Date of filing: **10.08.87**

(54) **Plough.**

(30) Priority: **13.08.86 SE 8603403**

(43) Date of publication of application:
**24.02.88 Bulletin 88/8**

(45) Publication of the grant of the patent:
**18.07.90 Bulletin 90/29**

(84) Designated Contracting States:
**DE FR GB**

(56) References cited:
**EP-A- 0 171 861**
**GB-A- 1 579 927**
**GB-A- 2 119 614**

(73) Proprietor: **AKTIEBOLAGET OVERUMS BRUK, Box 100,
S-590 96 Overum(SE)**

(72) Inventor: **Andersson, Lars Yngve, Hagstigen 10,
S-590 96 Överum(SE)**

(74) Representative: **Hagelbäck, Evert Isidor et al, c/o AB
Electrolux Patentavdelningen, S-105 45 Stockholm(SE)**

## Description

This invention relates to a plough preferably a reversible plough having a frame with at least one beam supporting one or preferably several plough bodies, the plough beam being supported in the frame by a three point connection in such a way that the plough beam, when moving in response to the plough body hitting an obstacle pivots about a first connection point at the same time as the cooperating parts of a second connecting point are released from each other or vice versa and that the third connecting point is a pivot joint which is movably fastened to the frame for adjusting the width of the ridge.

Ploughs of the above type are usually equiped with so called safety release devices in order to prevent the plough from being damaged when hitting obstacles in the ground. These safety release devices usually are so designed that each beam is pivotally fastened to a beam support which is attached to the frame and the beam is pressed downwards by means of a spring, a hydraulic cylinder being connected to a gas accumulator or the like. When hitting an obstacle the beam pivots vertically or obliquely upwards and when the obstacle has been passed the beam is again forced back into the ground by the spring or the cylinder.

An embodiment of a reversible plough which exists on the market under the name "Överum Vulcan" is for instance provided with a beam having two upper and two lower bearing points arranged in a square pattern, the bearing points being open bearing cups with which spherical bearing surfaces cooperate. The bearing cups might be parts of a beam support attached to the frame whereas the spherical bearing surfaces might be parts of the plough beam, the being cups and bearing surfaces being pressed towards each other by means of a spring device. When hitting an obstacle the plough beam pivots about a connecting line between the two upper bearing points and at the same time the bearing cups and the spherical bearing surfaces at the lower bearing points are released from each other. When the frame of the reversible plough is turned 180° in order to make it possible to change the plough direction a later pivoting movement of the plough beam will be accomplished about the connecting line between those points which previously was the lower but in the new position are the upper bearing points.

There are also known reversible multibody ploughs having a three point connection, see GB-A 1 579 927, which is so designed that the connecting points are placed in a triangular pattern. This means that the plough beam tilts about an axis drawn between the first and third point or after turning the frame 180° about an axis drawn between the second and third point.

In order to make it possible to adjust the width of the ridge for the type of ploughs described each plough beam support has to be loosend and turned about a vertical axis after which it is locked in a new position. This work is extensive and time consuming and the arrangement does not give a possibility to make a continous adjustment. It also means that the designs relatively complicated with separate systems for releasing the beam and for adjusting the width of the ridge.

The purpose of this invention is to create a simple and reliable arrangement where the above functions are integrated into one unit and also having the advantage that all plough beams can be adjusted in common. This is achieved with a plough having the feature according to the characterising part of Claim 1.

The invention will now be described with reference to the accompanying drawings in which Fig. 1 is a schematic perspective view showing a frame with a plough beam, Fig. 2 is a side view of a modified arrangement and Fig. 3 is a plan view of the last mentioned arrangement.

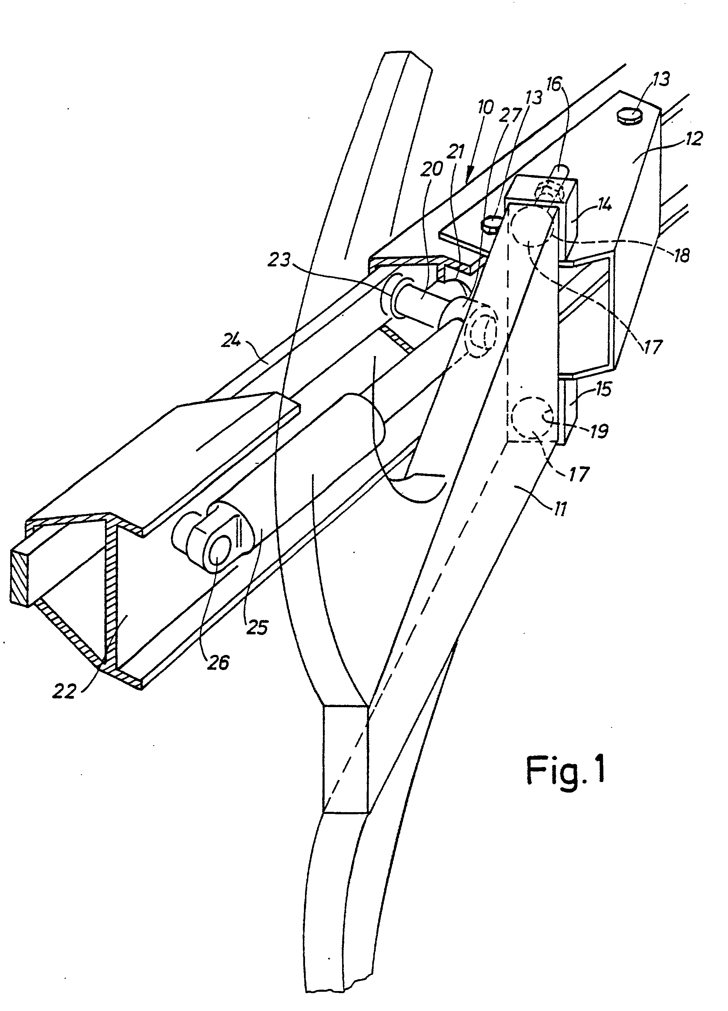

In Fig. 1 10 is a frame, supporting several T-shaped plough beams 11. Each plough beam is provided with a right hand laying and a left hand laying plough body not shown. The plough frame 10 has a beam fastening support 12 for each plough beam the support being attached to the frame by bolts 13 and being provided with an upper and a lower bracket 14 and 15 which are welded to the support. Each bracket has a threaded hole through which a bolt 16 is inserted and locked by a nut. The head 17 of the bolt 16 which faces the front part of the beam is spherical and cooperates with an upper and a lower cup shaped bearing surface 18 and 19 respectively on the plough beam in order to form two of the points in a three point connection for the plough beam. The plough beam is further provided with a dowel 20 which in the working position of the plough extends horizontally sideways through a hole 21 in a waist part 22 of the frame, the dowel 20 being secured to the beam between the two cup shaped bearing surfaces 18 and 19 and somewhat behind a line connecting these two bearing surfaces with each other. In its outer end the dowel is inserted into a pivot joint 23 which is a part of a guide bar 24. The guide bar 24 is by means, not shown, movable forwards and backwards in the length direction of the frame 10. A release cylinder 25, being in hydraulic connection with a gas accumulator, not shown, and operating as a compression spring, is linked to a mandrel 26 which is welded to the frame 10. The piston rod of the cylinder is via a link joint 27 turnably and swingably secured to the dowel 20. By means of the cylinder, the piston acts on the dowel 20 so that the beam is pressed towards the heads 17 of the bolts 16.

The device operates in the following way. When the frame is moved to the right in Fig. 1 and the plough body hits an obstacle the plough beam 11 will pivot upwards about a line connecting the upper bearing point, which is the point were the bearing surface 18 abuts the head 17 of the bolt 16, with the pivot joint 23. This means that the cup shaped bearing surface 19 will go out of engagement with the head of the bolt at the lower bracket 15. The cylinder 25 is simultaneously moved by the dowel 20 so that the cylinder pivots about the mandrel 26 as well as the link joint 27 at the same time as the piston of the cylinder tries to reset the plough beam to its original position. When the obstacle has been passed the plough beam 11 will then return to its normal working position and the cup shaped bearings surface 19 will again engage the head of the bolt at the lower bracket 15.

In its second working position, that is when the plough frame has been turned through 180°, the bearing point which is defined by the cup shaped bearing surface 19 and the head of the bolt at the corresponding bracket 15 will be placed at the top which means that any turning of the plough now will take place about this point.

When the width of the ridge has to be adjusted this will occur simultaneously for all plough beams by moving the guide bar 24 in the length direction of the frame. This is preferably done hydraulicly or manually. Thus, the pivot joint 23 is moved forwards or backwards which means that the plough beam is turned about a vertical axis connecting the two bearing points which are defined by the cup shaped bearing surfaces 18, 19 and the heads 17 of the bolts 16 with each other. This in turn means that the distances between the plough bodies and the frame is increased or decreased in a corresponding way. Movement forwards of the guide bar 24 causes a smaller width of the ridge whereas movement of the joint towards the rear gives a larger width of the ridge.

It should be observed that it is possible to make small adjustments of the position of the bearing points with respect to the frame by means of adjusting the bolts 16. It is of course possible to exchange positions between the cup shaped bearing surfaces and the spherical bearing surfaces of the head of the bolts as well as to use other types of devices in the connecting points. It is also possible to use a tensioning means instead of the pressure cylinder operating between the frame and the beam as well as it is possible to place the force creating means between the guide bar and the dowel or plough beam. By placing the pivot joint and the dowel at a suitable distance behind the axis connecting the two bearing points with each other it is possible to achieve a decreasing force curve when the device is released which is desirable this being achieved without additional pivot joints or levers.

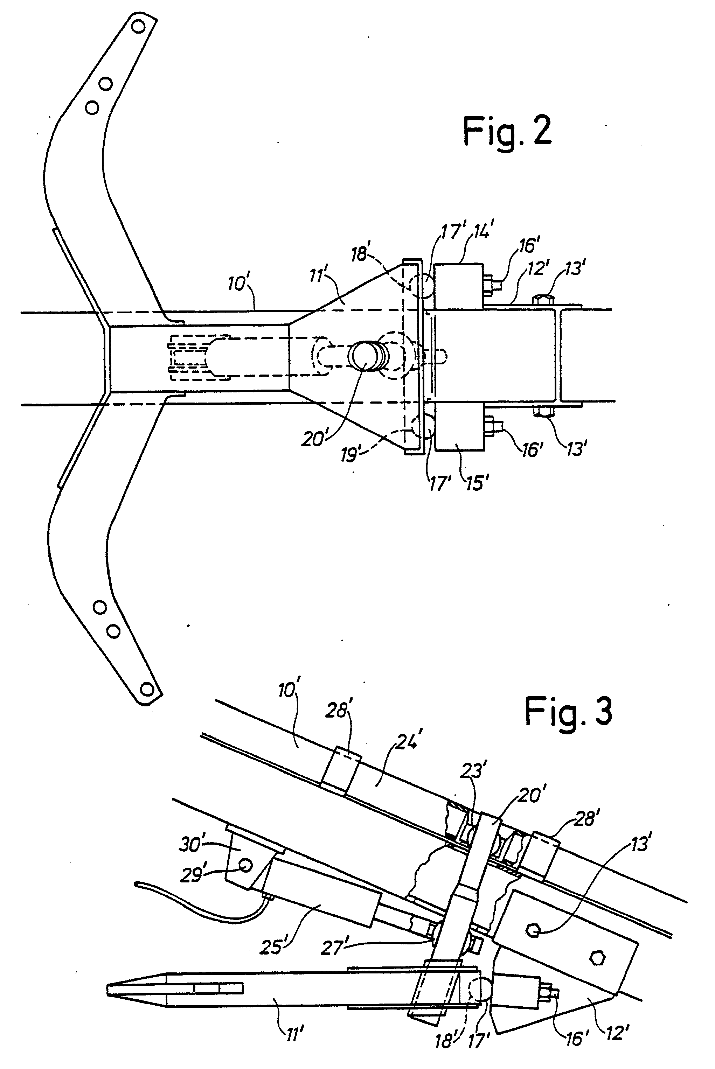

The embodiment shown in Fig. 2 and 3 is slightly modified with respect to the device shown in Fig. 1. The guide bar 24' is placed outside the frame 10' which consists of a square profile having two holes 21' in the sidewalls through which the dowel 20' extends from the beam 11' to the pivot joint 23'. This joint is fixed to the guide bar 24' which are guided by lugs 28' welded to the frame. It also appears from the figs. that the dowel 20' can be moved axially in the pivot joint in order to take up the variations in distances between the pivot joint and the beam when the guide bar is moved along the frame. Also the fastening system of the cylinder 25' to the frame 10' has been somewhat modified by placing the pivot shaft 29' vertically between two brackets 30'. This means that the link joint 27' follows the axial movement of the dowel 20' by a swinging motion about the shaft 30'. Because of the free motion margin between the end part of the cylinder 25' the bracket 30' and the shaft 29' the cylinder can however tilt in the vertical direction.

## Claims

1. Plough, preferably a reversible plough, having a frame (10) with at least one beam (11) to support one or preferably several plough bodies, the plough beam (11) being supported in the frame (10) by a three point connection in such a way that the plough beam when moving in response to the plough body hitting an obstacle, when pivots about a first connecting point (at 14) at the same time as the cooperating parts of a second connecting point (at 15) are released from each other or viceversa and that the third connecting point is a pivot joint (23) which is movably fastened to the frame (10) for adjusting the width of the ridge, characterized in that the third connecting point (23) is fastened to an element (24) which is movable in the length direction of the plough frame.

2. Plough according to claim 1, characterized in that the plough beam (11) is provided with means (20) extending from the third connecting point (23) to an area of the plough beam which seen in a side view is situated between the first and second connection point, said means being acted on by a force creating element (25).

3. Plough according to claim 2, characterized in that the force creating element (25) is pivotally fastened to the frame (10) and in said means (20).

4. Plough according to claim 2 or 3, characterized in that the force creating element (25) is a pressure mecanical component.

5. Plough according to any of claims 2–4, characterized in that the connection of the means (20) to the plough beam (11) seen in the direction of movement is placed behind an imagine line connecting the first and second connecting point.

6. Plough according to any of the preceeding claims, characterized in that it is equiped with means (16) for adjusting the first and/or second connecting point with respect to the frame (10).

7. Plough according to any of claims 2–6, characterized in that the point of action of the force creating element (25) on the means (20) extending from the third connecting point is placed closer to the line connecting the first and second connecting points than the third connecting point.

## Revendications

1. Charrue, de préférence charrue réversible comportant un bâti (10) avec au moins un age (11) pour soutenir un ou de préférence plusieurs corps de charrue, l'age de charrue (11) étant soutenu dans le bâti (10) par une liaison en trois points de telle sorte que l'age, lorsqu'il se déplace en réponse au choc de la charrue sur un obstacle et lorsqu'il est libéré, pivote autour d'un premier point de liaison (en 14) en même temps que les parties correspondantes d'un second point de liaison (15) sont libérées l'une de l'autre ou inversement, et le troisième point de liaison est une articulation (23) qui est fixée de façon mobile sur le bâti (10) pour régler la largeur du sillon, caractérisée en ce que la troisième articulation (23) est fixée sur un élément (24) qui est mobile dans le sens longitudinal du bâti de la charrue.

2. Charrue suivant la revendication 1, caractérisée en ce que l'age de charrue (11) comporte des moyens (20) s'étendant depuis le troisième point de liaison (23) jusqu'à une surface de l'age qui, en vue latérale, est située entre le premier et le second points de liaison, lesdits moyens étant actionnés par un élément (25) générateur de force.

3. Charrue suivant la revendication 2, caractérisée en ce que l'élément (25) générateur de force est fixé de façon articulée sur le bâti (10) et sur les moyens (20).

4. Charrue suivant la revendication 2 ou 3, caractérisée en ce que l'élément (25) générateur de force est un composant mécanique à pression.

5. Charrue suivant l'une quelconque des revendications 2 à 4, caractérisée en ce que la liaison des moyens (20) sur l'age (11) de charrue, considérée dans la direction du déplacement, est placée en arrière d'une droite imaginaire reliant le premier et le second points de liaison.

6. Charrue suivant l'une quelconque des revendications précédentes, caractérisée en ce qu'elle est équipée de moyens (16) pour régler le premier et/ou le second point de liaison par rapport au bâti (10).

7. Charrue suivant l'une quelconque des revendications 2 à 6, caractérisée en ce que le point d'action de l'élément (25) générateur de force sur les moyens (20) s'étendant depuis le troisième point de liaison est situé plus proche de la droite reliant le premier et le second points de liaison, que le troisième point de liaison.

## Patentansprüche

1. Pflug, vorzugsweise Drehpflug mit einem Rahmen (10) mit mindestens einem Grindel (11) zur Halterung eines Pflugkörpers oder vorzugsweise einiger Pflugkörper, welcher Pfluggrindel (11) am Rahmen (10) mittels einer Dreipunktverbindung derart gehalten ist, daß der Grindel bei seiner Bewegung gegenüber dem auf ein Hindernis stoßenden Pflugkörper gelöst wird und sich gleichzeitig um einen ersten Verbindungspunkt (bei (14) dreht, wenn die zusammenwirkenden Teile eines zweiten Verbindungspunktes (bei 15) voneinander oder vice versa gelöst werden, und daß der dritte Verbindungspunkt eine Drehgelenkverbindung (23) ist, die am Rahmen (10) zur Einstellung der Furchenbreite bewegbar befestigt ist, dadurch gekennzeichnet, daß der dritte Verbindungspunkt (23) an einem Element (24) befestigt ist, das in Längsrichtung des Pflugrahmens bewegbar ist.

2. Pflug nach Anspruch 1, dadurch gekennzeichnet, daß der Pfluggrindel (11) mit Mitteln (20) versehen ist, welche sich von dem dritten Verbindungspunkt (23) zu einem, in Seitenansicht gesehen, zwischen dem ersten und zweiten Verbindungspunkt liegenden Bereich des Grindels erstrecken, wobei die Mittel von einem Kraftorgan (25) beaufschlagt werden.

3. Pflug nach Anspruch 2, dadurch gekennzeichnet, daß das Kraftorgan (25) drehbar am Rahmen (10) und an den Mitteln (20) befestigt ist.

4. Pflug nach Anspruch 2 oder 3, dadurch gekennzeichnet, daß das Kraftorgan (25) ein druckmechanischer Teil ist.

5. Pflug nach einem der Ansprüche 2 bis 4, dadurch gekennzeichnet, daß die Verbindung der Mittel (20) mit dem Pfluggrindel (11) in Bewegungsrichtung gesehen hinter einer den ersten und zweiten Verbindungspunkt verbindenden gedachten Linien angeordnet ist.

6. Pflug nach einem der vorhergehenden Ansprüche, dadurch gekennzeichnet, daß er mit Mitteln (16) zur Einstellung des ersten und/oder zweiten Verbindungspunktes gegenüber dem Rahmen (10) versehen ist.

7. Pflug nach einem der Ansprüche 2 bis 6, dadurch gekennzeichnet, daß der Punkt der Beaufschlagung des Kraftorgans (25) auf die sich vom dritten Verbindungspunkt erstreckenden Mittel (20) näher der Verbindungslinie zwischen erstem und zweiten Verbindungspunkt als am dritten Verbindungspunkt angeordnet ist.

Fig.1

# Fig. 2

# Fig. 3